# EUROPEAN PATENT SPECIFICATION

(11) **EP 3 541 163 B1**
(45) Date of publication and mention of the grant of the patent: **15.09.2021**
(21) Application number: 17817119.5
(22) Date of filing: 17.11.2017
(51) Int. Cl.: A01D 34/416

(54) **LINE HEAD FOR A GARDEN TRIMMER**
BANDKOPF FÜR GARTENTRIMMER
TÊTE DE LIGNE POUR UN OUTIL DE COUPE DE JARDIN

(30) Priority: 18.11.2016 IT 201600117055
(43) Date of publication of application: 25.09.2019
(73) Proprietor: FLASHCUTTER S.R.L. CON UNICO SOCIO, 42015 Correggio (IT)
(72) Inventor: GUERRA, Lauro, 42015 Correggio (IT)
(74) Representative: Cataldi, Giulia
(86) International application number: PCT/IB2017/057208
(87) International publication number: WO 2018/092080

(56) References cited:
- EP-A1- 0 051 175
- EP-A1- 0 636 307
- EP-A1- 0 876 750
- US-A1- 2004 134 078
- US-A1- 2012 066 913

## Description

### TECHNICAL FIELD

The present invention relates to a line head for a garden trimmer.

Furthermore, the present invention relates to a fitting equipment for fitting a reel in a hollow body of a line head for a garden trimmer.

### BACKGROUND ART

As already known from for example US2004134078, garden trimmers with line heads are used to cut grass and other vegetation.

The garden trimmers comprise a rotating head housing a reel on which two plastic lines are wound.

As a rule, the reel has two annular grooves, one for each line, divided by a partition, wherein each groove contains a coil of grass-cutting line.

The head has, therefore, two outlets for the free ends of the two lines, and a respective bushing crossed by the line can be provided at each outlet.

A line head for a garden trimmer of the type relating to the present invention has been described in the Italian patent IT-1 420 500 in the name of the same applicant, whose overall content must be considered as a part of the present description.

The main problems of the garden trimmers currently available on the market, even those made according to the specifications of the aforementioned Italian patent IT-1 420 500, are that often a line (coming out of the head through a first outlet, possibly provided with a bushing) cannot rest in the corresponding groove, but, in use, tends to climb over the partition and pass into the adjoining groove, thus improperly intertwining with the other line (coming out of the same head through a second outlet eventually provided with a metal bushing, said second outlet being diametrically opposite to said first outlet).

It can also be observed that the line climbs over the partition when fitting the reel in the line head of the garden trimmer.

EP-A1-0 051 175 discloses and illustrates another example of a line head for a garden trimmer having the features claimed in the preamble of claim 1.

### DISCLOSURE OF INVENTION

Therefore, the object of the present invention is to provide a line head for a garden trimmer which is free from the aforementioned drawbacks and which avoids any risk of improper passage of a first trimming line from a corresponding first groove to a second adjacent groove occupied by a second trimming line.

A further object of the present invention is to provide a fitting equipment of a reel in a hollow body of a line head for a garden trimmer.

According to the present invention, therefore, it is provided a line head for a garden trimmer as claimed in claim 1 or in any one of the claims directly or indirectly dependent on claim 1.

Furthermore, according to the present invention, It is provided a fitting equipment of a reel in a hollow body of a line head for a garden trimmer as claimed in the independent claims 7, or 8, or in any one of the claims directly or indirectly dependent on claims 7 or 8. Moreover, the present invention refers to a method for fitting two lines in a line head for a garden trimmer as claimed in the independent claims 9 or 10.

### BRIEF DESCRIPTION OF THE DRAWINGS

For a better understanding of the invention, some embodiments are reported hereinafter, purely by way of illustration and not by way of limitation, with the aid of the accompanying drawings, in which:
- Figure 1 shows a perspective view of a line head for a garden trimmer to which a fitting equipment of an innovative type of reel can be applied;
- Figure 2 shows a side view of the head of Figure 1;
- Figure 3 is a perspective view (partially sectioned) of a first embodiment of a reel fitted in the head with the aid of the innovative reel fitting equipment;
- Figure 4 is a perspective view (partially sectioned) of a second embodiment of a reel fitted in the head with the aid of the innovative reel fitting equipment;
- Figures 5-16 show the different steps for using the fitting equipment of the reel in the head shown in Figures 1-3 (first embodiment); and
- Figures 17-19 show the different steps for using the fitting equipment of the reel in the head shown in Figures 1, 2, 4 (second embodiment).

### BEST MODE FOR CARRYING OUT THE INVENTION

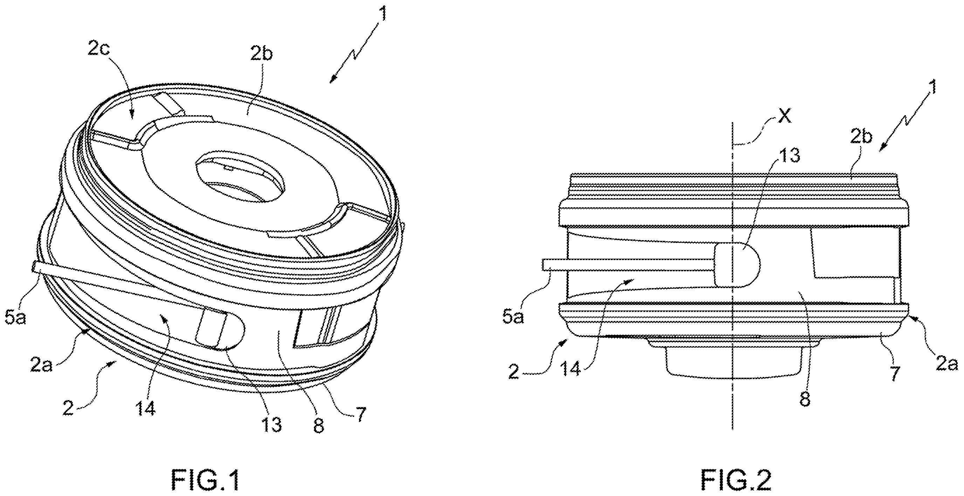

Referring now to Figures 1, 2 and 3, the reference number 1 generally indicates a head for a garden trimmer (not shown in its entirety because of known type), wherein the head 1 rotates about an axis X (Figure 2). The head 1 comprises a casing 2 consisting of a hollow body 2a and of a lid 2b (Figures 1, 2) designed to be fastened to the hollow body 2a by means of fastening means 2c (Figure 1), not shown because of known type.

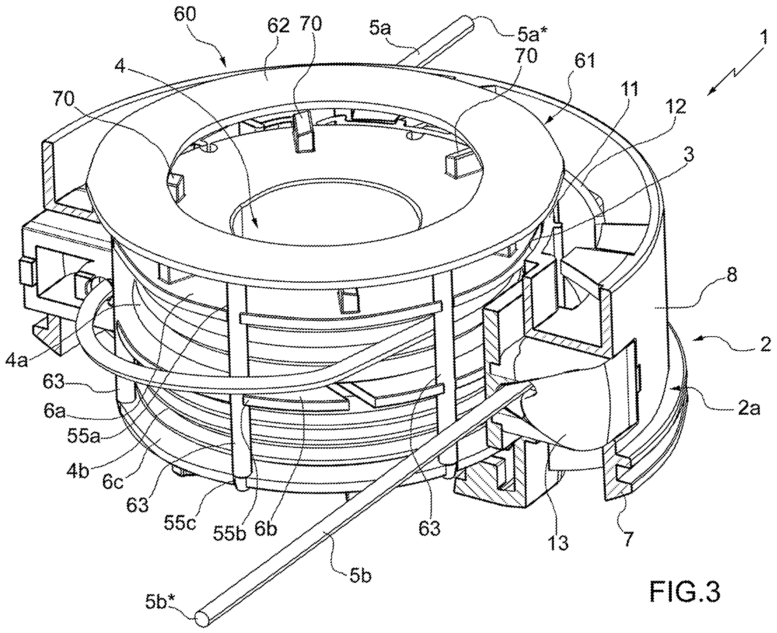

As shown in Figure 3, a cylindrical seat 3 (of axis X) for a reel 4 around which two lines 5a, 5b are wound is defined inside the casing 2.

As in some heads currently available on the market and as shown in Figure 3, the reel 4 has two outer circular walls 6a and 6c and an intermediate circular wall 6b having a diameter equal to the one of the outer circular walls 6a and 6c. The intermediate wall 6b defines two grooves 4a, 4b housing a respective winding of each line 5a, 5b. The two free ends 5a*, 5b* of the lines 5a, 5b can thus be arranged to let them come out of the casing 2.

A plurality of spacer elements 70 are fastened on the upper face of the outer circular wall 6a, the purpose of these spacer elements being illustrated hereinafter.

Referring to Figures 1, 2 and 3, the hollow body 2a has a base wall 7 and an annular wall 8 having an axis X. Two partitions 11 and 12, made of one piece (Figure 3), are provided inside the hollow body 2a. Their portions delimit the seat 3 and define two outlet paths of the two free ends 5a*, 5b* of the lines 5a, 5b from the reel 4.

Still referring to Figures 1, 2, 3 each free end 5a*, 5b* of each line 5a, 5b protrudes from the hollow body 2a passing through a respective metal bushing 13 arranged at a respective recess 14 formed on the outer face of the side wall 8 of the hollow body 2a.

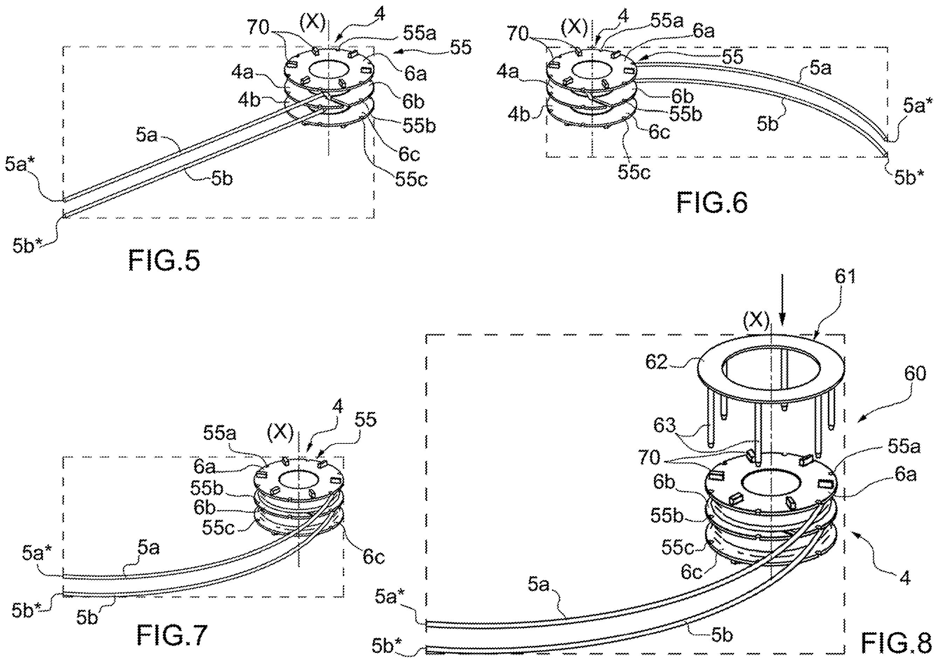

Figure 5 shows a first embodiment of the reel 4 having the aforementioned two annular grooves 4a, 4b.

Each line 5a, 5b is inserted in the respective groove 4a, 4b and fastened to the reel 4 by means of known and not shown systems.

Figure 6 shows the step in which each line 5a, 5b is wound in a respective groove 4a, 4b, winding both lines in a clockwise direction (with respect to the axis (X)).

In the embodiment of Figure 7, the two lines 5a, 5b have been completely wound on the reel 4 and only the respective free ends 5a* and 5b* project.

As shown in Figure 8, the line head 1 is further provided with a first fitting equipment 60 of the reel 4 in the hollow body 2a.

As shown in Figures 3, 8, the first embodiment of the fitting equipment 60 comprises a cage-shaped main body 61 consisting of a ring 62 from which six evenly spaced centring pins 63 project, each centring pin 63 being designed to engage a corresponding eyelet 55 formed on the periphery of the reel 4 (in its first embodiment).

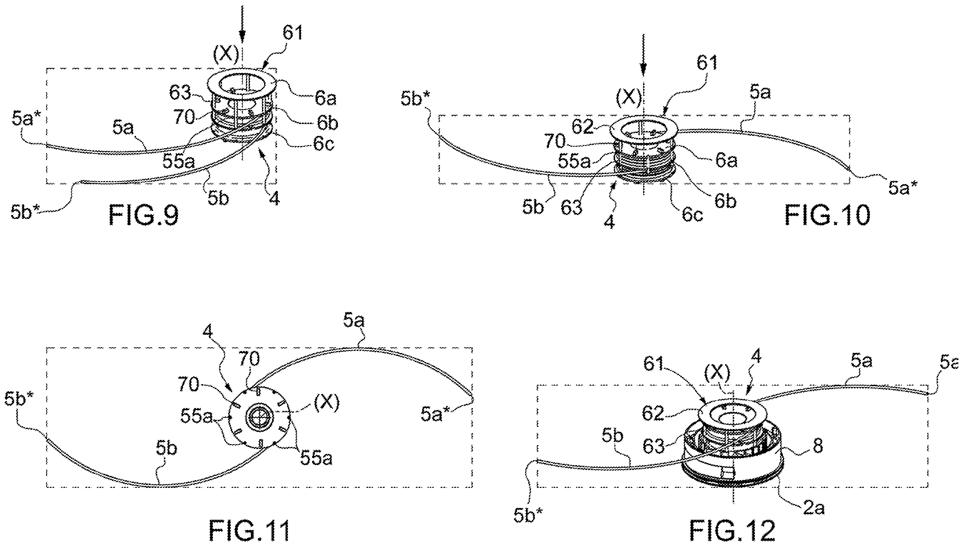

In fact, the reel 4 is provided with a plurality of eyelets 55, each of which extends vertically along a generatrix of the ideal cylindrical surface of the reel 4. Each eyelet 55 is given by the set of three peripheral cuts 55a, 55b, 55c vertically aligned in series and respectively arranged on the peripheral circumferences of the walls 6a, 6b, 6c. Figure 9 shows the arrangement in which each of the six centring pins 63 is inserted only in the two aligned and vertical cuts 55a, 55b, thus actually blocking only the free end 5a* (and leaving the free end 5b* disengaged). Now, the operator goes back three centring pins 63 with the free end 5b* and lowers the cage-shaped main body 61 so that the six centring pins 63 also engage the cuts 55c, thus blocking the free end 5b* in a position diametrically opposite to the one of the other free end 5a*. In this final arrangement, the lower face of the ring 62 rests on the spacer elements 70, which, as already stated, are on the upper face of the wall 6a.

The position of the lines 5a, 5b when they are fastened to the reel 4 is shown in Figure 11.

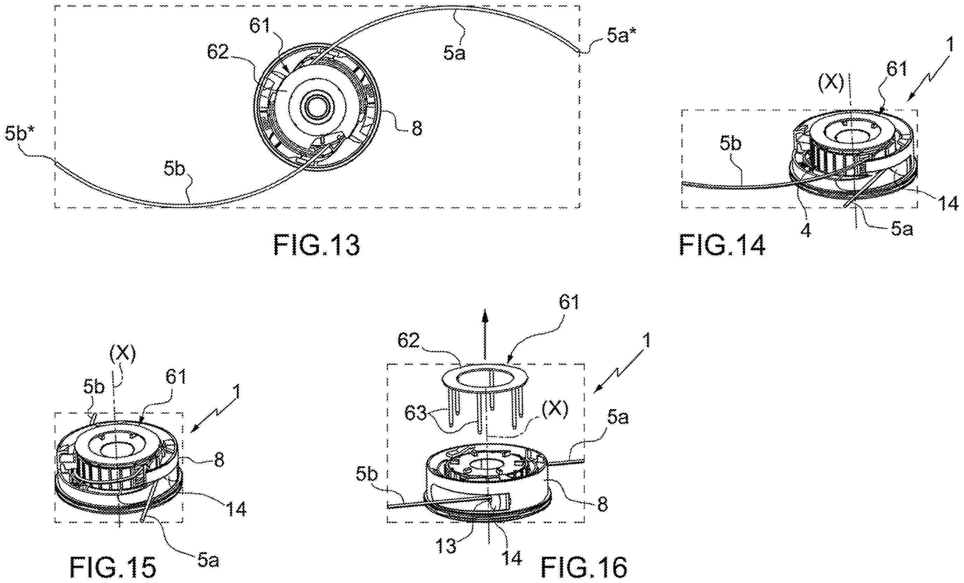

Now, the operator inserts the reel 4 into the hollow body 2a (Figure 12) and rotates it counterclockwise by manually inserting each free end 5a*, 5b* into the corresponding metal bushing 13 (Figures 13, 14, 15).

As a last fitting operation of the reel 4 in the head 1, the operator removes the cage-shaped main body 61, as shown in Figure 16.

The hollow body 2a is then closed by the lid 2b using the aforementioned fastening means 2c (Figure 1).

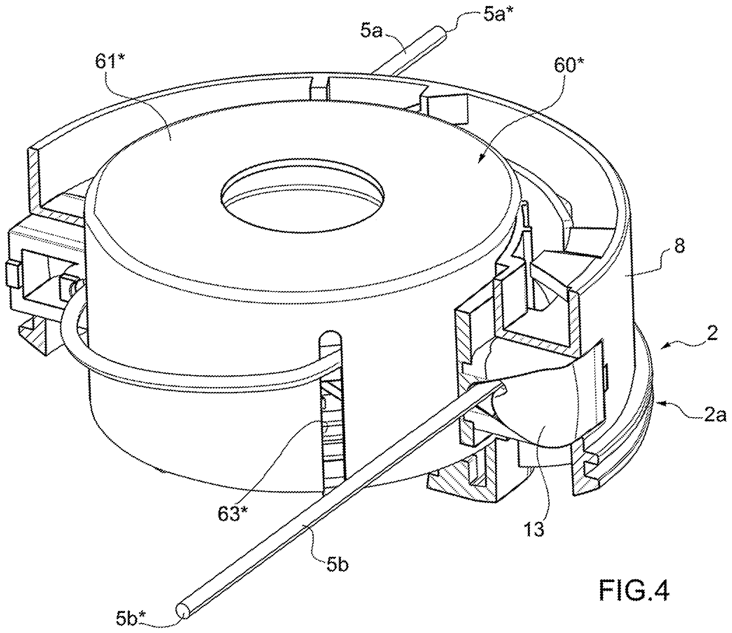

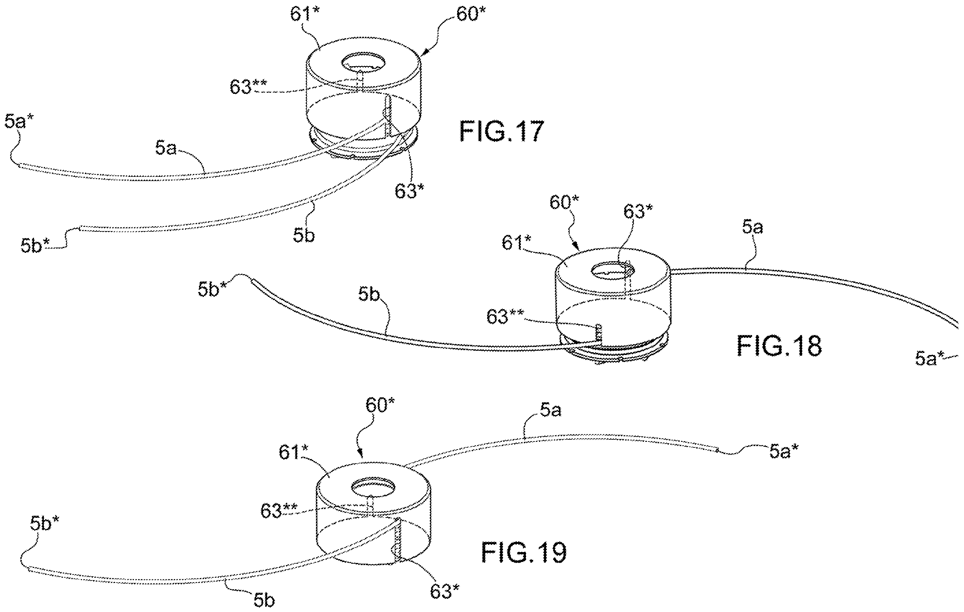

In the second embodiment shown in Figures 4, 17-19, the first fitting equipment 60 has been replaced by a second fitting equipment 60 comprising a main cup-shaped body 61* (having a substantially cylindrical shape) provided with two vertical slits 63*, 63** open on the lower side and diametrically opposite to each other (Figure 18).

Figures 17, 18, 19 show that the vertical slit 63* (which relates to the wound upper line 5a housed in the upper groove 4a) is much longer than the vertical slit 63** (which relates to the wound lower line 5b housed in the lower groove 4b).

The two vertical slits 63*, 63** act as the centring pins 63 described in relation to the first embodiment (see above).

Obviously, if a cup-shaped main body 61* (having a substantially cylindrical shape) is used, the reel 4 can be devoid of the eyelets 55 and of the relative peripheral cuts 55a, 55b, 55c.

Furthermore, the present invention also refers to a method for fitting two lines in a line head for a garden trimmer. With regard to the first embodiment shown in Figures 1-3, 5-16, the process comprises the following steps:
(f1) hooking each line to a respective groove of a reel;
(f2) at least partially winding each line in the respective groove; each groove being defined by a pair of circular walls; each circular wall having a plurality of peripheral cuts;
(f3) inserting at least one centring pin of a cage-shaped main body into two vertical peripheral cuts, which are consecutive and aligned with one another, thus actually fastening only a first free end of a first line and leaving, on the other hand, a second free end of a second line disengaged;
(f4) going back with said second free end and lowering said at least one centring pin, so that said at least one centring pin also engages a further cut, thus also fastening said second free end in a position that is diametrically opposite the one of said first free end;
(f5) inserting the reel into a hollow body of said line head and rotating said reel so as to introduce each free end into respective outlet means;
(f6) removing said cage-shaped main body and closing said hollow body with a lid.

As regards, instead, the second embodiment shown in Figures 1, 2, 4, 17-19, the process comprises the following steps:
(f1) hooking each line to a respective groove of a reel;
(f2) at least partially winding each line in the respective groove; each groove being defined by a pair of circular walls;
(f3) partially fitting on the reel a cup-shaped main body provided with two vertical slits, which are open on the lower side and are opposite to each other, thus actually fastening only a first free end of a first line in a first vertical slit and leaving, on the other hand, a second free end of a second line disengaged;
(f4) going back with said second free end and further lowering said cup-shaped main body, so that said second free end is also fastened by the other vertical slit in a position that is diametrically opposite to the one of said first free end;
(f5) inserting the reel into a hollow body of said line head and rotating said reel so as to introduce each free end into respective outlet means;
(f6) removing said main cup-shaped body and closing said hollow body with a lid.
The main advantage of a fitting equipment of the aforesaid kind consists in the fact that it allows driving each free end of each line towards its outlet without the risk that a portion of a line unravels and that, climbing over the intermediate wall, it at least partially rests not in the groove in which it should be correctly wound, but in the adjacent one.

## Claims

1. A line head (1) for a garden trimmer comprising:
a casing (2), which rotates around an axis (X) and has a hollow body (2a) provided with a lid (2b); a cylindrical seat (3) being defined inside said hollow body (2a); the hollow body (2a) being configured to house, in use, a reel (4); said reel (4) being provided, in turn, with two grooves (4a, 4b) on its substantially cylindrical surface; each groove (4a, 4b) being designed to receive a respective line (5a, 5b) wound around said axis (X); said hollow body (2a) being further provided with a base wall (7) and with an annular wall (8) with axis (X); said annular wall (8) being provided with two recesses (14), arranged in a diametrical position relative to one another, from which the lines (5a, 5b) come out; said line head (1) being further provided with a fitting equipment (60; 60*) for fitting said reel (4) in said hollow body (2a); said fitting equipment (60; 60*) comprising a main body (61; 61*) provided with means (63; 63*, 63**) designed to selectively fasten one of said lines (5a, 5b) while said reel (4) is being fitted in said hollow body (2a); said fitting equipment (60; 60*) being removable to permit, in use, the closing of said hollow body (2a) with a lid (2b).

2. Line head (1), according to Claim 1, **characterized in that** said fitting equipment (60) of said reel (4) comprises a cage-shaped main body (61) consisting of a ring (62) from which at least one centring pin (63) projects; said at least one centring pin (63) being designed to engage a corresponding eyelet (55) formed on the periphery of said reel (4).

3. Line head (1), according to Claim 2, **characterized in that** said eyelet (55) comprises a plurality of peripheral cuts (55a, 55b, 55c), which are aligned in series and are respectively arranged on peripheral circumferences of circular walls (6a, 6b, 6c); said walls (6a, 6b, 6c) being designed to define, in pairs, said grooves (4a, 4b) housing said lines (5a, 5b).

4. Line head (1), according to Claim 3, **characterized in that** a plurality of spacer elements (70) are fastened on the upper face of said circular wall (6a), said ring (62) of said cage-shaped main body (61) resting on said spacer elements.

5. Line head (1), according to anyone of the preceding claims, **characterized in that** each free end (5a*, 5b*) of each line (5a, 5b) extends through a respective metal bushing (13) arranged at a respective recess (14) formed on the outer face of a side wall (8) of said hollow body (2a).

6. Line head (1), according to Claim 1, **characterized in that** said fitting equipment (60*) of said reel (4) comprises a cup-shaped main body (61*) provided with two vertical slits (63*, 63**), which are open on the lower side and are opposite to each other.

7. A fitting equipment (60) configured to fit in a releasable manner to a reel (4) in a hollow body (2a) of a line head (1) for a garden trimmer; the fitting equipment (60) comprising a cage-shaped main body (61) consisting of a ring (62) from which at least one centring pin (63) projects; said fitting equipment (60) comprising at least one centring pin (63) being designed to engage a corresponding eyelet (55) obtained on the periphery of said reel (4).

8. A fitting equipment (60*) configured to fit in a releasable manner to a reel (4) in a hollow body (2a) of a line head (1) for a garden trimmer; the fitting equipment (60*) of said reel (4) comprising a cup-shaped main body (61*) provided with two vertical slits (63*, 63**), which are open on the lower side and are opposite to each other, the two vertical slits (63*, 63**) having, in particular, different lengths.

9. A method for fitting two lines in a line head for a garden trimmer; said method comprising the following steps:
(f1) hooking each line to a respective groove of a reel;
(f2) at least partially winding each line in the respective groove; each groove being defined by a pair of circular walls; each circular wall having a plurality of peripheral cuts;
(f3) inserting at least one centring pin of a cage-shaped main body into two vertical peripheral cuts, which are consecutive and aligned with one another, thus actually fastening only a first free end of a first line and leaving, on the other hand, a second free end of a second line disengaged;
(f4) going back with said second free end and lowering said at least one centring pin, so that said at least one centring pin also engages a further cut, thus also fastening said second free end in a position that is diametrically opposite the one of said first free end;
(f5) inserting the reel into a hollow body of said line head and rotating said reel so as to introduce each free end into respective outlet means;
(f6) removing said cage-shaped main body and closing said hollow body with a lid.

10. A method for fitting two lines in a line head for a garden trimmer; said method comprising the following steps:
(f1) hooking each line to a respective groove of a reel;
(f2) at least partially winding each line in the respective groove; each groove being defined by a pair of circular walls;
(f3) partially fitting on the reel a cup-shaped main body provided with two vertical slits, which are open on the lower side and are opposite to each other, thus actually fastening only a first free end of a first line in a first vertical slit and leaving, on the other hand, a second free end of a second line disengaged;
(f4) going back with said second free end and further lowering said cup-shaped main body, so that said second free end is also fastened by the other vertical slit in a position that is diametrically opposite to the one of said first free end;
(f5) inserting the reel into a hollow body of said line head and rotating said reel so as to introduce each free end into respective outlet means;
(f6) removing said cup-shaped main body and closing said hollow body with a lid.

## Patentansprüche

1. Fadenkopf (1) für einen Gartentrimmer, aufweisend:
ein Gehäuse (2), das um eine Achse (X) rotiert und einen Hohlkörper (2a) aufweist, der mit einem Deckel (2b) versehen ist;
einen zylindrischen Sitz (3), der innerhalb des Hohlkörpers (2a) definiert ist;
wobei der Hohlkörper (2a) dafür konfiguriert ist, im Gebrauch eine Spule (4) zu beherbergen;
wobei die Spule (4) wiederum mit zwei Rillen (4a, 4b) auf ihrer im Wesentlichen zylindrischen Oberfläche versehen ist;
wobei jede Rille (4a, 4b) dafür konzipiert ist, einen jeweiligen, um die Achse (X) gewickelten Faden (5a, 5b) aufzunehmen;
wobei der Hohlkörper (2a) ferner mit einer Basiswand (7) und mit einer ringförmigen Wand (8) mit der Achse (X) versehen ist;
wobei die ringförmige Wand (8) mit zwei, in Bezug aufeinander in einer diametralen Position angeordneten Aussparungen (14) versehen ist, aus denen die Fäden (5a, 5b) herauskommen;
wobei der Fadenkopf (1) ferner mit einer Montageeinrichtung (60; 60*) zum Montieren der Spule (4) im Hohlkörper (2a) versehen ist;
wobei die Montageeinrichtung (60; 60*) einen Hauptkörper (61; 61*) aufweist, der mit Mitteln (63; 63*; 63**) versehen ist, die dafür konzipiert sind, einen der Fäden (5a, 5b) selektiv zu befestigen, während die Spule (4) im Hohlkörper (2a) montiert wird;
wobei die Montageeinrichtung (60; 60*) entfernbar ist, um im Gebrauch das Verschließen des Hohlkörpers (2a) mit einem Deckel (2b) zu gestatten.

2. Fadenkopf (1) nach Anspruch 1, **dadurch gekennzeichnet, dass** die Montageeinrichtung (60) der Spule (4) einen käfigförmigen Hauptkörper (61) aufweist, der aus einem Ring (62) besteht, aus dem zumindest ein Zentrierstift (63) ragt; wobei der zumindest eine Zentrierstift (63) dafür konzipiert ist, mit einer entsprechenden, auf dem Umfang der Spule (4) ausgebildeten Öse (55) in Eingriff zu gelangen.

3. Fadenkopf (1) nach Anspruch 2, **dadurch gekennzeichnet, dass** die Öse (55) eine Vielzahl peripherer Einschnitte (55a, 55b, 55c) aufweist, die in Reihe ausgerichtet und auf peripheren Umfängen kreisförmiger Wände (6a, 6b, 6c) jeweils angeordnet sind; wobei die Wände (6a, 6b, 6c) dafür konzipiert sind, paarweise die Rillen (4a, 4b) zu definieren, die die Fäden (5a, 5b) beherbergen.

4. Fadenkopf (1) nach Anspruch 3, **dadurch gekennzeichnet, dass** eine Vielzahl von Abstandshalterelementen (70) auf der Oberseite der kreisförmigen Wand (6a) befestigt ist, wobei der Ring (62) des käfigförmigen Hauptkörpers (61) auf den Abstandshalterelementen ruht.

5. Fadenkopf (1) nach einem der vorhergehenden Ansprüche, **dadurch gekennzeichnet, dass** sich jedes freie Ende (5a*, 5b*) jedes Fadens (5a, 5b) durch eine jeweilige Metallhülse (13) erstreckt, die bei einer jeweiligen Aussparung (14) angeordnet ist, die auf der Außenseite einer Seitenwand (8) des Hohlkörpers (2a) ausgebildet ist.

6. Fadenkopf (1) nach Anspruch 1, **dadurch gekennzeichnet, dass** die Montageeinrichtung (60*) der Spule (4) einen becherförmigen Hauptkörper (61*) aufweist, der mit zwei vertikalen Schlitzen (63*, 63**) versehen ist, die auf der Unterseite offen sind und einander gegenüberliegen.

7. Montageeinrichtung (60), die für eine lösbare Montage an einer Spule (4) in einem Hohlkörper (2a) eines Fadenkopfs (1) für einen Gartentrimmer konfiguriert ist; wobei die Montageeinrichtung (60) einen käfigförmigen Hauptkörper (61) aufweist, der aus einem Ring (62) besteht, aus dem zumindest ein Zentrierstift (63) ragt; wobei die Montageeinrichtung (60) zumindest einen Zentrierstift (63) aufweist, der dafür konzipiert ist, mit einer entsprechenden, auf dem Umfang der Spule (4) erhaltenen Öse (55) in Eingriff zu gelangen.

8. Montageeinrichtung (60*), die für eine lösbare Montage an einer Spule (4) in einem Hohlkörper (2a) eines Fadenkopfs (1) für einen Gartentrimmer konfiguriert ist; wobei die Montageeinrichtung (60*) der Spule (4) einen becherförmigen Hauptkörper (61*) aufweist, der mit zwei vertikalen Schlitzen (63*, 63**) versehen ist, die auf der Unterseite offen sind und einander gegenüberliegen, wobei die beiden vertikalen Schlitze (63*, 63**) insbesondere unterschiedliche Längen aufweisen.

9. Verfahren zum Montieren von zwei Fäden in einem Fadenkopf für einen Gartentrimmer; wobei das Verfahren die folgenden Schritte aufweist:
(f1) Einhaken jedes Fadens in einer jeweiligen Rille einer Spule;
(f2) zumindest teilweises Wickeln jedes Fadens in der jeweiligen Rille; wobei jede Rille von einem Paar kreisförmiger Wände definiert wird; wobei jede kreisförmige Wand eine Vielzahl peripherer Einschnitte aufweist;
(f3) Einsetzen zumindest eines Zentrierstifts eines käfigförmigen Hauptkörpers in zwei vertikale periphere Einschnitte, die aufeinander folgen und miteinander ausgerichtet sind, wobei tatsächlich nur ein erstes freies Ende eines ersten Fadens befestigt wird und andererseits ein zweites freies Ende eines zweiten Fadens frei bleibt;
(f4) Zurückgehen mit dem zweiten freien Ende und Absenken des zumindest einen Zentrierstifts, so dass der zumindest eine Zentrierstift auch mit einem weiteren Einschnitt in Eingriff gelangt, wobei somit auch das zweite freie Ende an einer Position befestigt wird, die der des ersten freien Endes diametral gegenüberliegt;
(f5) Einsetzen der Spule in einen Hohlkörper des Fadenkopfes und Drehen der Spule, um so jedes freie Ende in jeweilige Auslassmittel einzuführen;
(f6) Entfernen des käfigförmigen Hauptkörpers und Schließen des Hohlkörpers mit einem Deckel.

10. Verfahren zum Montieren von zwei Fäden in einem Fadenkopf für einen Gartentrimmer; wobei das Verfahren die folgenden Schritte aufweist:
(f1) Einhaken jedes Fadens in einer jeweiligen Rille einer Spule;
(f2) zumindest teilweises Wickeln jedes Fadens in der jeweiligen Rille; wobei jede Rille von einem Paar kreisförmiger Wände definiert wird;
(f3) teilweises Montieren, auf der Spule, eines becherförmigen Hauptkörpers, der mit zwei vertikalen Schlitzen versehen ist, die auf der Unterseite offen sind und einander gegenüberliegen, wobei tatsächlich nur ein erstes freies Ende eines ersten Fadens in einem ersten vertikalen Schlitz befestigt wird und andererseits ein zweites freies Ende eines zweiten Fadens frei bleibt;
(f4) Zurückgehen mit dem zweiten freien Ende und ferner Absenken des becherförmigen Hauptkörpers, so dass das zweite freie Ende auch durch den anderen vertikalen Schlitz an einer Position befestigt wird, die der des ersten freien Endes diametral gegenüberliegt;
(f5) Einsetzen der Spule in einen Hohlkörper des Fadenkopfes und Drehen der Spule, um so jedes freie Ende in jeweilige Auslassmittel einzuführen;
(f6) Entfernen des becherförmigen Hauptkörpers und Schließen des Hohlkörpers mit einem Deckel.

## Revendications

1. Tête de ligne (1) pour un outil de coupe de jardin comprenant :
un boîtier (2), qui tourne autour d'un axe (X) et présente un corps creux (2a) pourvu d'un couvercle (2b) ; un siège cylindrique (3) défini à l'intérieur dudit corps creux (2a) ; le corps creux (2a) étant configuré pour loger, en utilisation, une bobine (4) ; ladite bobine (4) étant pourvue, à son tour, de deux rainures (4a, 4b) sur sa surface sensiblement cylindrique ; chaque rainure (4a, 4b) étant conçue pour recevoir une ligne (5a, 5b) respective enroulée autour dudit axe (X) ; ledit corps creux (2a) étant en outre pourvu d'une paroi de base (7) et d'une paroi annulaire (8) avec axe (X) ; ladite paroi annulaire (8) étant pourvue de deux évidements (14), agencés dans une position diamétrale l'un par rapport à l'autre, desquels les lignes (5a, 5b) sortent ; ladite tête de ligne (1) étant en outre pourvue d'un équipement de montage (60 ; 60*) pour monter ladite bobine (4) dans ledit corps creux (2a) ; ledit équipement de montage (60 ; 60*) comprenant un corps principal (61 ; 61*) pourvu d'un moyen (63 ; 63*, 63**) conçu pour fixer sélectivement l'une desdites lignes (5a, 5b) alors que ladite bobine (4) est montée dans ledit corps creux (2a) ; ledit équipement de montage (60 ; 60*) étant amovible pour permettre, en utilisation, la fermeture dudit corps creux (2a) avec un couvercle (2b).

2. Tête de ligne (1) selon la revendication 1, **caractérisée en ce que** ledit équipement de montage (60) de ladite bobine (4) comprend un corps principal en forme de cage (61) constitué d'un anneau (62) duquel se projette au moins une broche de centrage (63) ; ladite au moins une broche de centrage (63) étant conçue pour venir en prise avec un œillet (55) correspondant formé sur la périphérie de ladite bobine (4).

3. Tête de ligne (1) selon la revendication 2, **caractérisée en ce que** ledit œillet (55) comprend une pluralité de découpes périphériques (55a, 55b, 55c), qui sont alignées en série et sont respectivement agencées sur des circonférences périphériques de parois circulaires (6a, 6b, 6c) ; lesdites parois (6a, 6b, 6c) étant conçues pour définir, par paires, lesdites rainures (4a, 4b) logeant lesdites lignes (5a, 5b).

4. Tête de ligne (1) selon la revendication 3, **caractérisée en ce qu'**une pluralité d'éléments écarteurs (70) sont fixés sur la face supérieure de ladite paroi circulaire (6a), ledit anneau (62) dudit corps principal en forme de cage (61) reposant sur lesdits éléments écarteurs.

5. Tête de ligne (1) selon l'une quelconque des revendications précédentes, **caractérisée en ce que** chaque extrémité libre (5a*, 5b*) de chaque ligne (5a, 5b) s'étend à travers un manchon métallique (13) respectif agencé au niveau d'un évidement (14) respectif formé sur la face extérieure d'une paroi latérale (8) dudit corps creux (2a).

6. Tête de ligne (1) selon la revendication 1, **caractérisée en ce que** ledit équipement de montage (60*) de ladite bobine (4) comprend un corps principal cupuliforme (61*) pourvu de deux fentes verticales (63*, 63**), qui sont ouvertes sur le côté inférieur et sont opposées l'une à l'autre.

7. Équipement de montage (60) configuré pour être monté d'une manière libérable sur une bobine (4) dans un corps creux (2a) d'une tête de ligne (1) pour un outil de coupe de jardin ; l'équipement de montage (60) comprenant un corps principal en forme de cage (61) constitué d'un anneau (62) duquel se projette au moins une broche de centrage (63) ; ledit équipement de montage (60) comprenant au moins une broche de centrage (63) conçue pour venir en prise avec un œillet (55) correspondant obtenu sur la périphérie de ladite bobine (4).

8. Équipement de montage (60*) configuré pour être monté d'une manière libérable sur une bobine (4) dans un corps creux (2a) d'une tête de ligne (1) pour un outil de coupe de jardin ; l'équipement de montage (60*) de ladite bobine (4) comprenant un corps principal cupuliforme (61*) pourvu de deux fentes verticales (63*, 63**), qui sont ouvertes sur le côté inférieur et sont opposées l'une à l'autre, les deux fentes verticales (63*, 63**) présentant, en particulier, des longueurs différentes.

9. Procédé pour monter deux lignes dans une tête de ligne pour un outil de coupe de jardin ; ledit procédé comprenant les étapes suivantes consistant à :
(f1) accrocher chaque ligne à une rainure respective d'une bobine ;
(f2) enrouler au moins partiellement chaque ligne dans la rainure respective ; chaque rainure étant définie par une paire de parois circulaires ; chaque paroi circulaire comportant une pluralité de découpes périphériques ;
(f3) insérer au moins une broche de centrage d'un corps principal en forme de cage dans deux découpes périphériques verticales, qui sont consécutives et alignées l'une avec l'autre, fixant ainsi réellement seulement une première extrémité libre d'une première ligne et laissant, d'autre part, une seconde extrémité libre d'une seconde ligne désolidarisée ;
(f4) revenir à ladite seconde extrémité libre et abaisser ladite au moins une broche de centrage, de telle sorte que ladite au moins une broche de centrage entre également en prise avec une autre découpe, fixant ainsi également ladite seconde extrémité libre dans une position qui est diamétralement opposée à la une de ladite première extrémité libre ;
(f5) insérer la bobine dans un corps creux de ladite tête de ligne et faire tourner ladite bobine de manière à introduire chaque extrémité libre dans un moyen de sortie respectif ;
(f6) retirer ledit corps principal en forme de cage et fermer ledit corps creux avec un couvercle.

10. Procédé pour monter deux lignes dans une tête de ligne pour un outil de coupe de jardin ; ledit procédé comprenant les étapes suivantes consistant à :
(f1) accrocher chaque ligne à une rainure respective d'une bobine ;
(f2) enrouler au moins partiellement chaque ligne dans la rainure respective ; chaque rainure étant définie par une paire de parois circulaires ;
(f3) monter partiellement sur la bobine un corps principal cupuliforme pourvu de deux fentes verticales, qui sont ouvertes sur le côté inférieur et sont opposées l'une à l'autre, fixant ainsi réellement seulement une première extrémité libre d'une première ligne dans une première fente verticale et laissant, d'autre part, une seconde extrémité libre d'une seconde ligne désolidarisée ;
(f4) revenir à ladite seconde extrémité libre et abaisser encore ledit corps principal cupuliforme, de telle sorte que ladite seconde extrémité libre est également fixée par l'autre fente verticale dans une position qui est diamétralement opposée à la une de ladite première extrémité libre ;
(f5) insérer la bobine dans un corps creux de ladite tête de ligne et faire tourner ladite bobine de manière à introduire chaque extrémité libre dans un moyen de sortie respectif ;
(f6) retirer ledit corps principal cupuliforme et fermer ledit corps creux avec un couvercle.
